# EUROPEAN PATENT APPLICATION

(11) **EP 3 852 033 A1**
(43) Date of publication of application: **21.07.2021**
(21) Application number: 20152257.0
(22) Date of filing: 16.01.2020
(51) Int. Cl.: G06Q 10/02, G06Q 10/06

(54) **METHOD AND SYSTEMS FOR ANALYZING SOFTWARE TICKETS**

(71) Applicant: Deutsche Telekom AG, 53113 Bonn (DE)
(72) Inventor: KETABDAR, Hamed, 10707 Berlin (DE)
(74) Representative: Vossius & Partner Patentanwälte Rechtsanwälte mbB

(57) **Abstract**

A method and system for analyzing a software ticket in an issue tracking system, based on an output of a machine learning, ML, unit; wherein the issue tracking system comprises a first database with active tickets and a second backlog database with inactive tickets; wherein the ML-unit comprises one or more ML-engines each configured to provide a classification output for tickets in the backlog based on a training received on data from the first database in a training phase.

## Description

The invention relates to methods and systems for analyzing software tickets. In particular, the invention relates to the use of machine learning for analyzing software tickets.

Software development, particularly an agile development process, is heavily relaying on issue tracking systems, e.g. Jira, and documentation systems, e.g. based on a Wiki. Such systems enable software developers and project managers to align tasks, to find their dependencies, and to plan an execution. Furthermore, said systems enable a review and a quality assurance for different features, e.g. so- called user stories, in a software under development.

In a large software development team, usually a large number of tickets exists in a so-called backlog, each of which should be assigned to a certain sprint, i.e. so-called development windows, and/or to a certain developer. A ticket currently being worked on is typically referred to as an active ticket.

While the above problems may in part relate to an organizational task, analyzing the actual data of a large number of tickets and training a machine learning, ML, system to solve said problems relates to a technical problem.

There are attempts of using machine learning and data analytics methods in the literature, for example using machine learning integrated customer satisfaction surveys and automation for resolving problems and incidents.

In addition bot-based solutions exist, which assist in automating very simple operations such as searching trough ticket summaries sand developer names. However, their focus is mainly on providing statistics on the executing and ticketing process, and/or automatically turning technical problems into new tickets.

It is thus an object of the present invention to provide a method and system for analyzing software tickets and training a machine learning system for assigning tickets and reporting critical tickets. The above objects are solved by the subject-matter of the independent claims. The dependent claims relate to further aspects of the invention.

According to the invention there is provided a method for analyzing a software ticket in an issue tracking system, based on an output of a machine learning, ML, unit; wherein the issue tracking system comprises a first database with active tickets and a second backlog database with inactive tickets; wherein the ML-unit comprises one or more ML-engines each configured to provide a classification output for tickets in the backlog based on a training received on data from the first database in a training phase; wherein at least one inactive ticket from the backlog is presented to the ML-unit, wherein, based on the classification output, at least one label is predicted for said inactive ticket and the label being presented to a user via an interface; and wherein, when the user confirms the prediction, the ticket is made active with said label and the active ticket is used for further training of the ML-unit.

According to an aspect of the invention the method further comprises a clustering step in which the tickets in the backlog are clustered, based on one or more of: content, potential assignee, complexity level, and need for especial operations; and wherein the clusters are presented to the user via an interface.

According to an aspect of the invention the method further comprises detecting tickets in the backlog that may end up in complications and software bugs.

According to an aspect of the invention each label classification and/or prediction is associated with one ML engine in the ML unit.

According to an aspect of the invention the one or more ML-engine is based on a random forests model and preferably a variant thereof.

According to the invention there is provided a method for training a machine learning, ML, unit, for analyzing a software ticket in an issue tracking system, wherein the issue tracking system comprises a first database with active tickets and a second backlog database with inactive tickets; wherein the ML-unit comprises one or more ML-engines, each configured, in a operation phase, to provide a classification output for inactive tickets in the backlog based on the training received on data from the first database; wherein at least one active ticket from first database is presented to the ML-unit as a sample, wherein in a label creation unit at least one label is determined based on the information about the active ticket in the issue tracking system; and wherein the sample and the label form a dataset for training the ML-unit.

According to an aspect of the invention the label generation unit infers labels based on the interaction of developers with active tickets and/or a set of rules.

According to the invention there is provided a system for analyzing a software ticket in an issue tracking system, based on an output of a machine learning, ML, unit; wherein the issue tracking system comprises a first database with active tickets and a second backlog database with inactive tickets; wherein the ML-unit comprises one or more ML-engines each configured to provide a classification output for inactive tickets in the backlog based on a training received on data from the first database in a training phase; wherein at least one ticket from the backlog is presented to the ML-unit, wherein, based on the classification output, at least one label is predicted for said inactive ticket and the label being presented to a user via an interface; and wherein, when the user confirms the prediction, the ticket is made active with said label and the active ticket is used for further training of the ML-unit.

According to an aspect of the invention the system further comprises a clustering unit configured to cluster the tickets in the backlog based on one or more of: content, potential assignee, complexity level, and need for especial operations; and wherein an interface is configured to present the clusters to the user via an interface.

According to an aspect of the invention the analyzing comprises detecting tickets in the backlog that may end up in complications and software bugs.

According to an aspect of the invention each label classification and/or prediction is associated with one ML engine in the ML unit.

According to an aspect of the invention the one or more ML-engine is based on a random forests model and preferably a variant thereof.

According to the invention there is provided a computer program product comprising instructions which, when the program is executed by a computer, cause the computer to carry out the method of any one of preceding aspects.

### Brief description of the drawings

The objects, advantages, and features of the present invention, as well as others, will be more readily understood from the following detailed description of certain preferred embodiments of the invention, when considered in conjunction with the accompanying drawings in which:
- Fig. 1: shows a block diagram of the system according to an embodiment of the invention in a training phase; and
- Fig. 2: shows a block diagram of the system according to an embodiment of the invention in an operating phase.

### Detailed description of the drawings

It is a general concept of the present invention to use machine learning and/or predictive analytics to facilitate and enhance a project management process, in particular a software development process. In an embodiment of the invention, a machine learning, ML, unit is configured to generate recommendations on "when" and "whom" should take care of a ticket with which priority.

It is a further general concept of the present invention to use machine learning in an early warning system to detect tickets that have chances of developing future technical bugs.

In an embodiment of the invention, a ML-system is configured to generate flags, i.e. early warning messages, for certain tickets to be considered for certain actions. In a preferred embodiment, a machine learning system is configured to detect user stories that are too general or too large, and therefore require splitting into smaller ones.

In an embodiment of the invention, the ML-system is configured to detect user stories that may end up in complications and software bugs. This allows for notification of a project manager, who can pay particular attention to them during execution steps.

In an embodiment of the invention, the ML-system is configured to cluster tickets existing in backlog, based on content, potential assignee, complexity level, need for especial operations. The clustering result provides a better overview to a project manager and a development team for planning and executing software projects.

According to the invention there is provided a machine learning system for analyzing software tickets.

A ticket element, within an issue tracking system, is a running report on a particular problem, its status, and other relevant data. Tickets are commonly created in a help desk or call center environment and a have a unique reference number, also known as a case, issue, or call log number, which is used to allow the user or help staff to quickly locate, add to, or communicate the status of the user's issue or request.

In an embodiment of the invention, the ML-system is configured to perform tasks in an issue tracking system. The ML- system is configured to detect technical or process related complications in an issue tracking system.

In an embodiment of the invention, the ML-system is based on one or more ML-models. The ML-models are trained based on training data in a training phase. The training data comprises a "sample" and "labels". This allows the ML-system to properly map between samples and a certain class. Once the models are trained, they are used for classifying new tickets, i.e. samples. In a preferred embodiment assignment to members of a development team, or upcoming sprints is based on the classification obtained by the ML-system.

In an embodiment of the invention, a sample is an active ticket, i.e. a ticket which has been manually processed, e.g. has been assigned, i.e. labeled, to a developer and or sprint. In preferred embodiments those samples comprise one or more of the following:
i. a word vector representing a summary;
ii. a word vector representing a description;
iii. a assigned priority level;
iv. a date of creation of the ticket quantized, e.g. in weeks or days;
v. a sprint number that the ticket is planned for;
vi. a developer ID of a developer that is currently working on the ticket, or a history of IDs for developers that have been working on the same ticket;
vii. a current status and/or a history of the ticket status, e.g. todo, in progress, in review, etc.;
viii. a number and/or word vector of comments that are placed inside the ticket; and
ix. an assigned priority level.

In an embodiment of the invention, a "label" or, so called ground truth, which are known for active tickets. In preferred embodiments those labels comprise one or more of the following:
i. a ID of a certain developer in the team;
ii. a Sprint number;
iii. an information that the ticket is too general and is split into subtasks;
iv. an information that the ticket is too small or too detailed and is merged with a bigger user story; and
v. an information on the ticket ending up in technical complications.

One main challenge in ML approaches is collecting of labels for training. In a first embodiment of the invention the users of the issue tracking system provide the tags corresponding to one or more of the above labels to a sample. In preferred embodiments the tags in particular correspond to labels iii) to v) as listed above. As active tickets are used as samples no particular training data is required. Instead the training data is generated in an ongoing process as more and more tickets become active.

In an embodiment of the invention, the labels are created in a label creation unit which is configured to determine a label based on the information about an active ticket in the issue tracking system. In a preferred embodiment the label generation unit infers labels based on the interaction of developers with active tickets and/or a set of rules.

In a second embodiment of the invention, the labels are generated based on "actions" recorded in the issue tracking system. The action that a bug ticket is created and it is related to a past user story is used as a label for a technical complication, i.e. label v as listed above. The action of splitting a large user story to sub-tasks is used as a label that the user story has been too large, i.e. label iii as listed above. The action of merging a ticket with a user story is used as a label that the original ticket has been too small/detailed, i.e. as label iv as listed above.

In other words, in the training phase the active tickets are used as samples and are labeled either manually or, preferably, based on an action recoded for the active tickets in the issue tracking system. That is, in the second embodiment, the training of the machine learning system is also performed without manual input, solely based on active ticket data of the issue tracking system.

In an embodiment of the invention as ML-model, a random forests model and/or their variants is used. Random forests in this context result in an advantage because of:
a) Their ability of modeling and learning unbalanced feature spaces that are a mix of numeric and symbolic (or even binary) features,
b) They do not require an extensive amount of historical data to be trained well,
c) Once trained, one can explore "what has been learned" by exploring the model. The model can be unfolded as a sequence of hierarchical rules that are automatically learned from data.

The effects are thus summarized as follows:
A) Reducing time and effort used in repetitive issue tracking operations
B) Improving the transparency and efficiency for software development planning
C) Avoiding issues and bugs, and enhancing quality of software by early detection of process problems and actions which potentially result in software issues and bugs.

In an embodiment of the invention, the learned models are shared across multiple related projects within a program. This means that once a model is trained for a certain project, it is re-used for automation in another related projects within a program.

It is a general concept of the invention that the methodology is used beyond technical software development for any planning task, which requires automatic assignments or early warnings.

As mentioned earlier, an issue tracking system comprises a database holding "active" tickets. In an embodiment of the invention, in a training phase, labeling is based on the interaction of developers with active tickets. For instance, if a bug ticket is generated by a developer and "connected" to an active ticket, this causes the active ticket to get a label of "bug risk" in a label database.

Additionally or alternatively labels are generated based on a set of rules and interaction of developers with those tickets. In an example an assignment of a ticket to a certain developer can generate a label as "developer ID". Moreover, an assignment of a ticket to a certain sprint can generate a sprint number label. The obtained labels are subsequently used to train one or more ML engines.

In a preferred embodiment of the invention, each category of classification and/or prediction is associated with one ML engine. In a preferred embodiment, one ML engine, is trained for predicting developer ID, and another ML Engine is trained to raise an anomaly flag.

In an embodiment of the invention, once the one or more ML engines are trained, the system is employed on the backlog of an issue tracking system to assign predictions to the tickets existing in the backlog. The backlog tickets are presented to the different ML engines. Based on the respective learning of each engine in the training phase, each engine is then generating a certain category of prediction, e.g. predicting a developer ID fitting the ticket, raising an anomaly flag, etc. Those predictions are presented to on an interface. Once said prediction is accepted the ticket becomes active and is an active ticket which preferably is used to further train the respective one or more ML-engines.

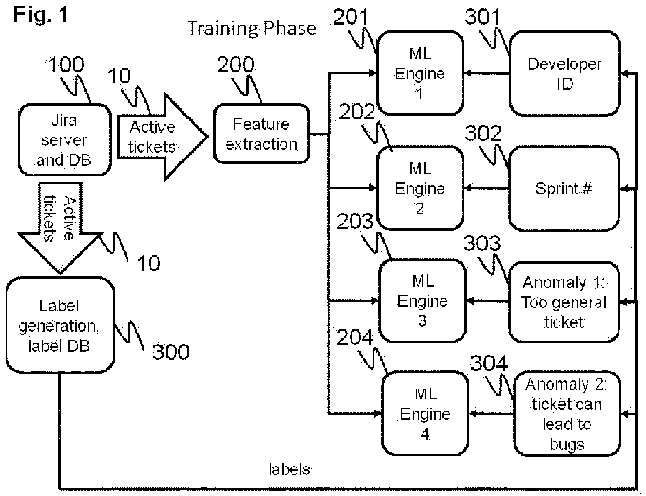

Fig. 1 shows a block diagram of the system according to an embodiment of the invention in a training phase. Active labels 10 are provided from a issue tracking system to a feature extraction 200 and a label generation 300. In the feature extraction 200 the features of a sample are extracted and subsequently provided as a sample to ML-engines 201,202,203,204 of the ML-Unit. In the label extraction 300 labels corresponding to the features are extracted and subsequently provided as labels to the ML-engines 201,202,203,204 of the ML-Unit.

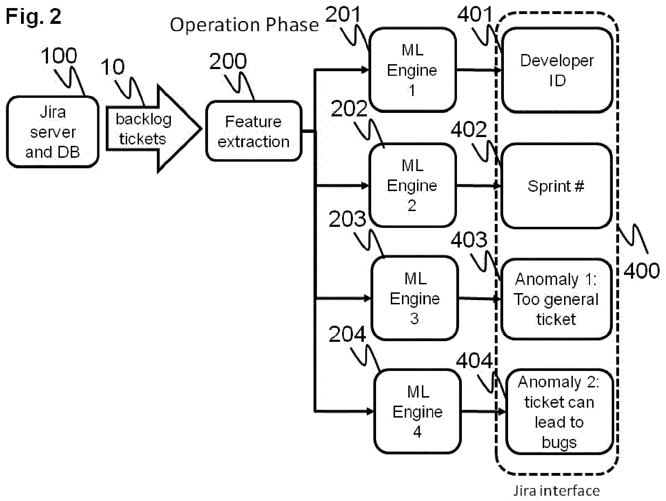

Fig. 2 shows a block diagram of the system according to an embodiment of the invention in an operating phase. Tickets from the backlog 20 are provided from the issue tracking system to a feature extraction 200. Preferably the same features extraction as in the training phase. In the feature extraction 200 the features of a backlog ticket are extracted and subsequently provided as a sample to ML-engines 201,202,203,204 of the ML-Unit. The ML-engines each provide a label prediction 401, 402, 403, 404 according to the labels they were trained for. The label predictions are presented to the user via an interface 400.

By way of an example a use case is described:
Today is the sprint review meeting and John, as technical project manager, is preparing himself to conduct the session. He uses the system according to the invention to get a proposal on next task assignments. He sees that a few tasks from the backlog are picked for the next sprints with a proposal on which developer should take care of them. In addition to that, the system has flagged a ticket as being two general requiring to break it down into a smaller tickets.

An example of such a ticket can be: "Visualize statistics on parameters". Such a ticket title can be very general. In addition, it may need different development to take care of different aspects of it: front-end development to visualize, backend development to provide the interface to database, and data science team to write code for calculating those statistics. As such, the system suggests that John breaks the general ticket into smaller tickets.

John receives also another warning from the system: A ticket that he has created sometimes back in the backlog is now assigned to the next sprint. However, it is flagged as "risky". An example of such a ticket can be "Perform ingest of new data to the database". The system has detected that most of attempts in uploading/ingesting data to the database led to a situation of creating corresponding new bug tickets. This can be for example because of incomplete fields in the data of project, etc. Such a warning enables John to remember discussing the setup better and in more details with the team during the sprint meeting, making sure that the data that is supposed to be ingested according to the ticket is in a well shape and complete.

What has been described and illustrated herein are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims-and their equivalents-in which all terms are meant in their broadest reasonable sense unless otherwise indicated.

## Claims

1. Method for analyzing a software ticket in an issue tracking system, based on an output of a machine learning, ML, unit;
wherein the issue tracking system comprises a first database with active tickets and a second backlog database with inactive tickets;
wherein the ML-unit comprises one or more ML-engines each configured to provide a classification output for tickets in the backlog based on a training received on data from the first database in a training phase;
wherein at least one inactive ticket from the backlog is presented to the ML-unit,
wherein, based on the classification output, at least one label is predicted for said inactive ticket and the label being presented to a user via an interface; and
wherein, when the user confirms the prediction, the ticket is made active with said label and the active ticket is used for further training of the ML-unit.

2. The method according to claim 1, further comprising a clustering step in which the tickets in the backlog are clustered, based on one or more of: content, potential assignee, complexity level, and need for especial operations; and wherein the clusters are presented to the user via an interface.

3. The method according to claim 1 or 2, wherein the method further comprises detecting tickets in the backlog that may end up in complications and software bugs.

4. The method according to any one of claims 1 to 3, wherein each label classification and/or prediction is associated with one ML engine in the ML unit.

5. The method according to any one of claims 1 to 4, wherein the one or more ML-engine is based on a random forests model and preferably a variant thereof.

6. A method for training a machine learning, ML, unit, for analyzing a software ticket in an issue tracking system,
wherein the issue tracking system comprises a first database with active tickets and a second backlog database with inactive tickets;
wherein the ML-unit comprises one or more ML-engines, each configured, in a operation phase, to provide a classification output for inactive tickets in the backlog based on the training received on data from the first database;
wherein at least one active ticket from first database is presented to the ML-unit as a sample,
wherein in a label creation unit at least one label is determined based on the information about the active ticket in the issue tracking system; and
wherein the sample and the label form a dataset for training the ML-unit.

7. The method according to claim 6, wherein the label generation unit infers labels based on the interaction of developers with active tickets and/or a set of rules.

8. A system for analyzing a software ticket in an issue tracking system, based on an output of a machine learning, ML, unit;
wherein the issue tracking system comprises a first database with active tickets and a second backlog database with inactive tickets;
wherein the ML-unit comprises one or more ML-engines each configured to provide a classification output for inactive tickets in the backlog based on a training received on data from the first database in a training phase;
wherein at least one ticket from the backlog is presented to the ML-unit,
wherein, based on the classification output, at least one label is predicted for said inactive ticket and the label being presented to a user via an interface; and
wherein, when the user confirms the prediction, the ticket is made active with said label and the active ticket is used for further training of the ML-unit.

9. The system of according to claim 8, further comprising a clustering unit configured to cluster the tickets in the backlog based on one or more of: content, potential assignee, complexity level, and need for especial operations; and
wherein an interface is configured to present the clusters to the user via an interface.

10. The system of according to claim 8 or 9, wherein the analyzing comprises detecting tickets in the backlog that may end up in complications and software bugs.

11. The system of according to any one of claims 8 to 10, wherein each label classification and/or prediction is associated with one ML engine in the ML unit.

12. The system of according to any one of claims 8 to 11, wherein the one or more ML-engine is based on a random forests model and preferably a variant thereof.

13. A computer program product comprising instructions which, when the program is executed by a computer, cause the computer to carry out the method of any one of claims 1 to 5.
